# EUROPEAN PATENT APPLICATION

(11) **EP 4 841 451 A1**
(43) Date of publication of application: **18.11.2026**
(21) Application number: 25176488.2
(22) Date of filing: 14.05.2025
(51) Int. Cl.: G06F 11/362, A63F 13/35, A63F 13/67

(54) **METHOD AND APPARATUS FOR IDENTIFYING SOFTWARE BUGS IN VIDEO GAME APPLICATION**

(71) Applicant: WYVRN, 59800 Lille (FR)
(72) Inventor: VEZZOLI, Eric, 59000 LILLE (FR); WEE, Hong Jie, 138538 SINGAPORE (SG); QUEK, Darren Hsiu Wen, 138538 SINGAPORE (SG); SINGH, Karanjot, 138538 SINGAPORE (SG); QUEK, Oliver Shao Wei, 138538 SINGAPORE (SG); HUNGATE, Sebastian, 138538 SINGAPORE (SG)
(74) Representative: RVDB

(57) **Abstract**

There are provided methods and apparatus for identifying software bugs in a video game application. To reach that aim, event data representative of at least an event generated during runtime of the video game is received (21). A software bug is identified (22) by feeding the event data into an Al model trained in the context of the video game. A request for a video content representative of the runtime of the video game at the time of occurrence of the at least an event is transmitted (23). Video data representative of the video content is received (24) in response to the request. The software bug is reported (25) according to bug data descriptive of the software bug and according to the video data.

## Description

### FIELD

The present invention relates generally to the field of video games and video game applications. More specifically, the present application relates to the field of video games and, in particular, to identifying software bugs in the video game application. The invention also pertains to the field of artificial intelligence, and in particular to Al-based systems capable of automatically identifying software bugs in video game software programs.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

The field of video games has grown significantly over the past decades, both in terms of technological sophistication and global adoption. Video games are executed on a variety of client terminals, including personal computers, gaming consoles, and mobile devices. These applications often rely on complex software architectures involving real-time rendering, user interaction, physics engines, and networked multiplayer systems. As video games become increasingly immersive and interactive, the underlying codebase becomes correspondingly more intricate. Modern video game applications may involve millions of lines of code and the integration of numerous third-party libraries, engines, and custom modules. The delivery of these applications typically occurs through online distribution platforms, allowing for rapid deployment to a wide user base.

The complexity of video game software makes it particularly susceptible to software bugs. Bugs may manifest as crashes, visual anomalies, unresponsive controls, inconsistent game logic, or degraded performance. These issues negatively affect the user experience, leading to frustration, disengagement, or negative reviews. From a developer's perspective, bugs can result in significant reputational damage, increased customer support costs, and revenue loss. In competitive or multiplayer games, undetected bugs may compromise game balance or introduce unfair advantages, further impacting user retention and satisfaction. Moreover, bugs discovered after commercial release are often more costly to address, as patches must be developed, tested, and deployed in live environments without introducing regressions or new errors.

A technical challenge lies in the identification and reporting of software bugs once the game has been released. In most cases, developers rely on user reports or crash analytics to detect problems. These reports are often incomplete, lacking contextual details such as what the user was doing when the bug occurred or how to reproduce the issue. Users may be unable or unwilling to provide precise technical feedback. Automated telemetry systems exist, but they may not capture sufficient detail to isolate the root cause of complex bugs. Additionally, variations in hardware, operating systems, and game states across different users make it difficult to reproduce reported issues reliably. This situation delays diagnosis and resolution, which impacts the development team's ability to maintain software quality post-release.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method for identifying software bugs in a video game application, the method being implemented by at least a processor and comprising:
- receiving event data representative of at least an event generated during runtime of the video game;
- identifying a software bug based on the event data by feeding the event data into an Al model trained in a context of the video game;
- transmitting a request for a video content representative of the runtime of the video game at a time of occurrence of the at least an event;
- receiving video data representative of the video content in response to the request;
- reporting the software bug according to bug data descriptive of the software bug and the video data.

In an exemplary embodiment, the receiving of event data, the identifying of the software bug, the transmitting of the request, the receiving of video data and the reporting are implemented by an Al engine run by a computing device communicatively coupled with a client terminal running the video game application

In an exemplary embodiment, the event data is generated by a Software Development Kit module, called SDK module, integrated in the video game application.

In a further exemplary embodiment, the event data is transmitted from the SDK module to a scheduler module integrated in the video game application, the scheduler module being configured to interface the video game application with the Al engine.

In another exemplary embodiment, the video data is generated by a backend module integrated in the video game application upon reception of the request.

In a further exemplary embodiment, the request is relayed to the backend module by the scheduler module, the video data being transmitted from the backend module to the scheduler module.

In an additional exemplary embodiment, the request comprises temporal information representative of the time of occurrence of the at least an event.

In another exemplary embodiment, the event data belongs to a set of data comprising:
- data representative of a type of the at least an event;
- data representative of contextual information relating to the in-game environment at the time of the at least an event;
- data representative of the time of occurrence of the at least an event.

According to a second aspect of the present application, there is provided an apparatus for identifying software bugs in a video game application, wherein the apparatus comprises a memory associated with at least a processor configured to implement the method in accordance with the first aspect of the present application.

According to a third aspect of the present application, there is provided a system comprising an apparatus according to the second aspect and a client terminal communicatively coupled with the apparatus, the client terminal comprising a memory associated with at least a processor configured to run the video game application, the video game application comprising a scheduler module, a SDK module and a backend module, wherein the system is configured to implement the method in accordance with the first aspect of the present application.

According to a fourth aspect of the present application, there is provided a computer program product including instructions which, when the program is executed by one or more processors, causes the one or more processors to carry out a method according to the first aspect of the present application.

According to a fifth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a video game software bug reporting system, in accordance with at least one exemplary embodiment.
**Figure 2** shows a schematic block diagram of step(s) of a method for identifying software bugs in a video game application, in accordance with at least one exemplary embodiment.
**Figure 3** illustrates a schematic block diagram of an example of an apparatus in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiments may be individually implemented, e.g., as an alternative embodiment.

At least one of the aspects generally relates to an apparatus, system and method for identifying software bugs in a video game application executed on a client terminal. The client terminal comprises a software development kit (SDK) module that collects in-game event data, a scheduler module that coordinates communication, and a backend module that captures or retrieves video content(s). Event data generated during gameplay and representative of an event occurring during gameplay is transmitted by the scheduler to a computing device, e.g., a cloud-based server. The computing device hosts an Al engine that analyzes the event data using an Al model specifically trained for the video game. When a software bug is detected, the Al engine requests a video sequence illustrating the gameplay context at the time of occurrence of the event. The scheduler retrieves the video content from the backend module and sends it to the computing device. A report is generated based on bug data descriptive of the identified software bug and on video data descriptive of the video content.

The apparatus, system, and method according to this aspect provide several technical effects and advantages over prior art, which are related to the automated identification of software bugs in video game applications.

Real-time or near-real-time collection and structured transmission of in-game event data from the client terminal to a remote computing device enables continuous monitoring of gameplay execution without requiring manual intervention from the user or developer. By using a dedicated SDK module to capture detailed, context-rich event data, the system ensures precise detection of anomalous behavior based on actual in-game conditions.

The use of a scheduler module to coordinate communication allows the client terminal to offload intensive analysis tasks to the computing device, reducing local resource consumption and preserving game performance. This aspect also provides scalability, as the Al-based analysis is performed centrally in the cloud, allowing multiple client terminals to be monitored simultaneously.

The integration of an Al model specifically trained for the video game enhances the accuracy and relevance of software bug detection. Rather than relying on generic rules or fixed heuristics, the present aspect uses game-specific patterns to identify software bugs, which increases detection reliability and reduces false positives. This leads to faster and more accurate identification of software bugs and defects during runtime.

The request and retrieval of video content corresponding to the moment a software bug was detected provide a clear visual context that supports verification and diagnosis. This visual evidence enables developers to understand the conditions under which the bug occurred and helps reproduce the issue, which is often a critical step in debugging.

The generation of a bug report that includes both analytical data and video content provides a comprehensive and actionable output. It consolidates the results of automated analysis into a structured format that can be directly used by quality assurance teams and developers. Overall, this aspect improves the speed, accuracy, and efficiency of bug identification and reporting in video game applications, while minimizing the need for manual reproduction or user-submitted feedback.

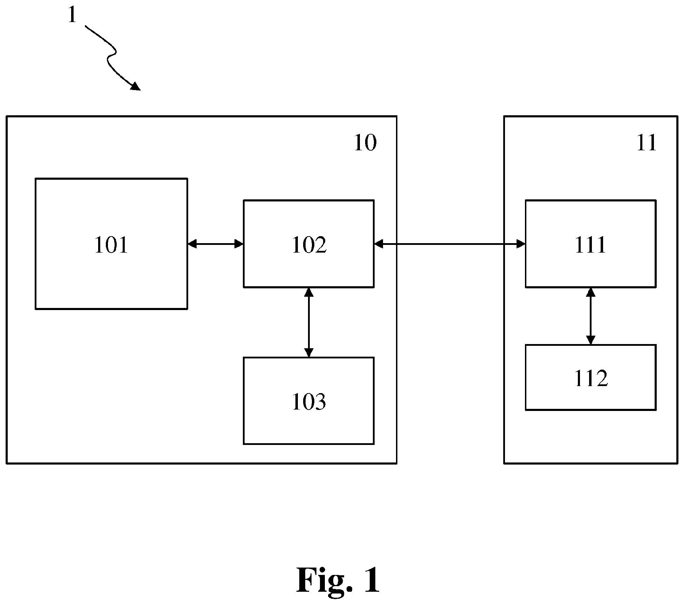

**Figure 1** illustrates a gaming assistance environment for a user playing a video game in accordance with at least one exemplary embodiment.

Blocks of figure 1 represent indifferently operations/steps of a process/method and processing units implementing such operations/steps of the process/method. The processing units may be implemented as a single element or as separate elements as a combination of hardware and software as known to those skilled in the art.

Figure 1 shows system 1 configured for identifying and reporting one or more software bugs occurring when running a video game executed as a video gaming application on a client terminal 10.

System 1 comprises client terminal 10 communicatively coupled to a (remote) computing device 11, e.g., a cloud server.

Client terminal 10 corresponds to a personal computer, a gaming console, a smartphone, a tablet, or any other computing device configured to run a video game application.

A video game application refers to a software program designed to provide an interactive gaming experience to a user. The video game application comprises executable code and associated resources that implement the video game's logic, user interface, graphics, audio, and input handling. The video game application may be developed using a combination of proprietary code and third-party libraries or engines. The video game application is executed on client terminal 10.

The video game application is structured as a software program that runs on an operating system and utilizes the hardware capabilities of client terminal 10 to render graphics, process user inputs, manage in-game events, and maintain game state. The video game application may comprise multiple software components such as rendering engines, physics engines, animation systems, artificial intelligence modules, and network communication layers. These components operate together to execute the gameplay logic and respond to user interactions in real time.

The video game application executed on client terminal 10 relies on a game engine, which provides the core functionalities required to render graphics, process physics, manage assets, and handle gameplay logic. The game engine operates as the central runtime environment that manages the execution flow of the video game and coordinates different processes and subsystems such as input handling, animation, scripting, and audio.

The video game application comprises additional software modules interacting with the game engine, including a software development kit (SDK) module 101, a scheduler module 102, and a backend module 103. These modules operate alongside the core components of the video game application and are embedded within the software architecture of the video game application.

SDK module 101 is configured to monitor and report events that occur during the execution of the video game application. SDK module 101 captures information related to user interactions, system behavior, and internal game engine events. SDK module 101 may be implemented as a static or dynamic library integrated directly into the video game's codebase. For instance, in games developed using the Unity engine, the SDK is provided as a Unity^{®} package including scripts, assets, and configuration files necessary for the SDK's operation. In another example, SDK module 101 is implemented as a set of scripts or plugins tailored for specific game engines or frameworks. For example, in HTML5-based games, SDK module 101 corresponds to a JavaScript library.

Scheduler module 102 operates as a coordination and communication layer between the local modules, such as SDK module 101 and backend module 103, of client terminal 10 and external systems such as a cloud-based server 11. Scheduler module 102 is for example implemented as a dynamic-link library (DLL) on Windows^{®}-based systems. A DLL allows the scheduler module to be loaded into the memory space of the video game application, enabling function calls and data exchange without the overhead of interprocess communication. According to another example, scheduler module 102 is implemented as a shared object (.so) file on Unix^{®}-like systems, serving a similar purpose as a DLL on Windows^{®}. According to a further example, scheduler module 102 is implemented as a standalone service or daemon process that communicates with the video game application through interprocess communication mechanisms such as sockets, pipes, or message queues.

Backend module 103 is configured for the capture and provision of video content generated during gameplay of the video game player by a user. Backend module 103 operates in parallel with the game engine and may access video data through screen capture mechanisms, rendering pipeline integration, or pre-buffered recording systems. Backend module 103 may be implemented in various forms, depending on the architecture of the video game application and the capabilities of client terminal 10. For example, backend module 103 is integrated as a plugin or extension within the game engine, enabling direct access to the rendering pipeline. This approach allows backend module 103 to capture frames rendered by the game engine, either by intercepting the output of the rendering process or by utilizing built-in functionalities provided by the engine for screen recording. For instance, game engines like Unity and Unreal Engine offer APIs and plugins that facilitate in-game video capture, which can be leveraged by the backend module to obtain the requested video sequences. In another example, backend module 103 operates as a separate process or service that captures the screen output of the video game application. This implementation involves using system-level screen capture Application Program Interfaces (APIs) or third-party libraries to record the visual output displayed on the screen during gameplay.

Client terminal 10 and computing device 11 are each configured to communicate (transmit and receive) data with each other through a network infrastructure.

The network infrastructure may correspond to one or more interconnected communication networks enabling the transfer of digital data between physically separated devices. The network infrastructure may include public or private networks and may operate over wired or wireless connections. In typical implementations, the network infrastructure comprises the Internet, through which client terminal 10 and computing device 11 exchange data using standard communication protocols.

Client terminal 10 may connect to the Internet using a local access network, which can be a residential or enterprise local area network (LAN), a Wi-Fi network, or a mobile network such as 4G or 5G. The local access network provides connectivity via a router or gateway device, which forwards packets to the broader Internet through an internet service provider (ISP). In mobile configurations, the terminal may use a cellular base station and mobile core network to access Internet services.

Computing device 11 may be hosted within a data center infrastructure or a cloud computing environment operated by a third-party provider. Computing device 11 may be connected to the Internet through high-bandwidth and low-latency backbone links.

The network infrastructure may include intermediate devices such as switches, routers, network address translation (NAT) devices, and domain name system (DNS) servers. These components support routing, address resolution, and traffic management. Communication between client terminal 10 and computing device 11 may be secured using encrypted protocols such as HTTPS, which provides data integrity and confidentiality by encapsulating HTTP communication within Transport Layer Security (TLS).

Computing device 11 is configured to host an artificial intelligence (AI) engine configured to analyze gameplay data transmitted from client terminal 10. The Al engine executes an Al model 111 trained specifically for the video game application running on client terminal 10. Al model 111 is designed to detect and identify software bugs occurring while a user is playing the video game, i.e., at runtime, based on events occurring during gameplay. Al model 111 is designed to recognize patterns in event data that are indicative of software bugs or abnormal system behavior occurring during gameplay of the video game.

The Al engine operates as a software process or service within computing device 11. Al model 111 is for example implemented as a supervised learning model such as a decision tree, support vector machine, neural network, or deep learning architecture, trained on historical data generated from the same video game application and/or on historical data generated from video game applications of the same type or genre of the video game application running on client terminal 10. Training data may include labeled examples of known bugs, user session logs, event sequences, and metadata recorded during development or public gameplay sessions.

In a variant, Al model 111 belongs to a set of Al models executed by the Al engine, each Al model of the set of Al models being trained for a specific video game application or for a specific genre or type of video game. In this configuration, the Al engine includes a model management component that associates incoming event data with the corresponding Al model based on the identity of the video game executed on client terminal 10 or based on the identity of the genre of type of the video game executed on client terminal 10. The identity may be determined by using metadata included in the event data, such as a game identifier, version number, or application signature. Each Al model within the Al engine is trained using gameplay data collected from the specific video game the Al model is associated with or using gameplay data collected from video games of the same genre or type of video game the Al model is associated with. This training data includes labeled examples of known bugs, event sequences, system states, and user interactions relevant to that specific video game or to that specific genre of video game. By maintaining a separate Al model for each video game or for each genre of video game, the Al engine can take into account the unique structure, logic, and expected behavior of each video game application. This increases the precision and relevance of bug detection, as Al models are optimized to recognize patterns specific to the target game environment.

In an embodiment, the Al engine further comprises a bug reporting module 112 corresponding to a software component of the Al engine. Bug reporting module 112 is configured to generate bug reports based on the output data produced by Al model 111 and on data received from client terminal 10, including video data descriptive of the video content of the gameplay of the video game at the time of occurrence of the software bug.

Bug reporting module 112 may be implemented as a large language model (LLM) receiving as input bug identification data, event data and video data and outputting a bug report. Bug reporting module 112 may process data received from a plurality of client terminals executing the video game application to generate bug reports aggregating data descriptive of the software bugs occurring during gameplay of the video game on the client terminals, e.g., by aggregating similar software bugs or software bugs receiving a same identifier as output of Al model 111.

The bug report generated by bug reporting module 112 is accessed remotely by authorized users through a client terminal connected to computing device 11. Access is typically provided via a web-based interface, allowing users to view and manage bug reports using a standard web browser. Computing device 11 exposes a secure HTTPS endpoint through which the web interface is served. Once authenticated, users can navigate a dashboard that presents aggregated bug data, detailed descriptions of each identified issue, and corresponding video sequences illustrating the context in which the bugs occurred. The interface may support filtering and sorting functions, enabling users to review reports by bug type, occurrence frequency, timestamp, or the version of the video game application. This setup facilitates real-time consultation of bug reports by development teams, QA analysts, or support personnel, without requiring direct access to terminal client 10 or raw gameplay data.

A process of providing gaming assistance to user 10 is implemented by one or more processors, notably one or more processors of a system comprising computing device 11 communicatively coupled to client terminal 10.

In a first operation of the process, SDK module 101 collects or generates event data representative of in-game events occurring during gameplay of the video game. Events include, for example, player interactions, changes in game state, and internal game engine events. The event data is then transmitted by SDK module 101 to scheduler module 102.

The generation of event data is performed when an event is triggered within the video game: the game engine invokes a predefined function of SDK module 101 to notify the occurrence of the event with an appropriate command.

SDK module 101 then performs the capture and formatting of data associated with the event. This includes extracting and organizing relevant parameters, such as the type of event (e.g., "PLAYER_JUMP"), data representing contextual information related to the in-game environment (e.g., player position, active level, character status), and data representative of the time of occurrence of the event (e.g., a precise timestamp). In addition, SDK module 101 may collect system data such as memory usage, frame rate, or active thread count at the time of occurrence of the event.

The event data may be normalized into a consistent internal structure to ensure uniform handling by downstream modules such as scheduler module 102. SDK module 101 may also enrich the event data with metadata that is useful for diagnostics or aggregation, such as the session identifier, current level identifier, user ID, or internal game state values.

The event data is formatted and structured in a determined format such as JSON, Protocol Buffers, or a custom binary format, then transmitted to scheduler module 102. The transmission is carried out using an inter-module communication mechanism adapted to the software architecture of client terminal 10. This may include function calls, local messaging queues, shared memory, or internal communication interfaces depending on whether the modules are implemented as part of a single process or separate components.

In a second operation of the process, scheduler module 102 transmits the event data received from SDK module 101 to computing device 11, and more specifically to the Al engine implementing Al model 111. Event data is for example transmitted over a network connection to computing device 11, e.g., using HTTPS as a secure transport protocol.

Scheduler module 102 may format the event data into a transmission-ready structure, when appropriate.

The event data may be transmitted in real time or near real time. Scheduler module 102 sends event data associated with each event or with small batches of events to computing device 11 as soon as they are received from SDK module 101.

In a variant, scheduler module 102 operates in batch mode. Event data is stored temporarily in a local buffer or memory queue and transmitted at predefined intervals or when certain conditions are met, such as a threshold number of events or the completion of a gameplay session. This variant allows to reduce the frequency of transmissions and network bandwidth.

In another variant, the transmission may occur conditionally, for example based on the relevance or severity of events. For example, scheduler module 102 may locally filter the event data and prioritize events that are likely to be associated with abnormal or erroneous behavior. Only selected data is then transmitted to computing device 11 for further processing by Al model 111. This variant optimizes cloud resource usage and limits unnecessary data transmission.

In a third operation of the process, event data representative of one or more events generated during runtime of the video game and received by computing device 11 from client terminal 10, and more specifically from scheduler module 102, is processed by Al engine, and more specifically by Al model 111, to identify a software bug based on (or associated with) the event data. The software bug is identified by Al model 111 by feeding the event data into Al model 111, which has been previously trained in the context of the video game currently executed on client terminal 10.

The training phase of Al model 111 in the context of the video game application comprises training based on training datasets generated from the same video game application as the video game application running on client terminal 10. The training datasets may be generated when developing and/or testing the video game application. The training datasets may be further generated or obtained from other client terminals while users are playing this specific video game.

In a variant, the training phase of Al model 111 in the context of the video game application comprises training based on training datasets generated from video game applications of the same type or genre of the video game application running on client terminal 10. According to this variant, the context of the video game application corresponds to the context of the type or genre of the video game.

The genre or type of the video game belongs to a set of genres including but not limited to the following genres or types: first-person shooter (FPS) games, characterized by player-controlled weapon-based combat in a first-person perspective; real-time strategy (RTS) games, which involve managing resources and issuing commands to units in a real-time environment; role-playing games (RPGs), which provide narrative-driven gameplay with character development; racing games, which simulate vehicle operation and competitive driving scenarios; sports simulation games, which emulate real-world sports mechanics; and adventure or platform games, which emphasize exploration, problem-solving, and environmental interaction.

The event data may be parsed and pre-processed by the Al engine. This preprocessing stage may include normalization of input values, validation of data structure, temporal alignment of events, and extraction of relevant features from the event data. Examples of features may include event types, event frequency, duration between events, system state indicators, and specific in-game variables included in the contextual information.

Al model 111 processes the event data to evaluate whether the event or the combination or sequence of events described by the event data corresponds to known failure patterns or statistically abnormal behavior. The Al model 111 is implemented using supervised learning techniques such as decision trees, convolutional neural networks, or recurrent neural networks trained on labeled datasets specific to the video game, or specific to the genre or type of the video game, that include examples of both normal and faulty gameplay sessions. In a variant, the Al model 111 corresponds to an unsupervised model configured to detect deviations from typical behavior without requiring predefined labels.

For example, Al model 111 may detect that a "PLAYER_INPUT" event was followed by a long absence of response events, suggesting a freeze or crash. According to another example, Al model 111 may recognize that a "LEVEL_COMPLETE" event occurred without prior expected actions, indicating a possible logic error.

If the analysis by Al model 111 indicates a high likelihood of a software bug, Al model 111 outputs a classification result, which includes for example a bug detection flag, a confidence score, a category or type of bug, and an identifier for the event or sequence of events involved.

This output is forwarded to bug reporting module 112 for further processing and storage, as explained hereinafter.

In a fourth operation of the process, following the identification of the software bug based on the event data, Al engine generates a request for a video content representative of the runtime of the video game at a time of occurrence of the event or sequence of events.

The request is transmitted by computing device 11 (i.e., by the Al engine) to client terminal 10 over the network connection, the request being intended to scheduler module 102. This request is intended to obtain a visual representation of the game's execution at the time of occurrence of the one or more events associated with the detected software bug, in order to support validation, diagnosis, and reporting of the software bug.

The request is generated or issued by the Al engine based on the temporal metadata comprised in the event data received from scheduler module 102. The request comprises temporal information representative of the time of occurrence of the one or more events. This temporal information is a reference to the relevant time window when the one or more events occurred. The temporal information comprises for example a start and end timestamp, or a timestamp with a defined duration offset before and after the detected software bug. The request may further comprise metadata such as the session identifier, game identifier, and client terminal identifier to allow precise targeting of the required video content.

In a fifth operation of the process, scheduler module 102 receives the request generated by the Al engine from computing device 11.

Scheduler module 102 processes the request, i.e., parses the request and extract relevant information or parameters from the request such as the temporal information, associated with the detected bug, the session identifier, and any other metadata necessary to obtain the corresponding video content. Scheduler module 102 then generates an internal instruction based on the received request to request the video content to backend module 103.

This instruction is relayed from scheduler module 102 to backend module 103, which is configured to access screen capture data or gameplay video that has been recorded or buffered during execution of the video game application. The communication between scheduler module 102 and backend module 103 may be implemented through function calls, local messaging protocols, or shared memory interfaces, depending on the architecture of client terminal 10.

In a sixth operation of the process, backend module 103 retrieves the video content requested by scheduler module 102. The video content retrieved by backend module 103 is represented by structured video data, referred to as video data. The video data is representative of the visual output of the video game application during a specific segment of gameplay execution, typically corresponding to the time period in which the one or more events used to detect the software bug had occurred.

The video data comprises a sequence of image frames encoded in a standard digital video format such as MP4, WebM, or H.264. Each frame represents the graphical state of the video game at a given point in time and is ordered chronologically to reflect the real-time progression of gameplay. In addition to the raw visual content, the video data may include timestamps aligned with the original gameplay session to allow precise correlation with the associated event data.

The video data may further comprise associated metadata, such as the video resolution, frame rate, encoding parameters, session identifier, and a time index marking the location of the one or more events. Depending on the system configuration, the video content may have been captured in real time using screen capture techniques or reconstructed from recorded frame buffers stored temporarily in client terminal 10.

In a seventh operation of the process, scheduler module 102 receives the video data representative of the video content and relays the video data to computing device 11, more specifically to Al engine executed on computing device 11.

Scheduler module 102 acts as a relay and does not process or modify the video content itself. The purpose of scheduler module 102 is to ensure that the request from the Al engine is accurately forwarded to backend module 103, along with all necessary parameters to retrieve the correct portion of video content. This enables backend module 103 to extract or generate the requested gameplay video corresponding to the moment when the event data indicated the presence of a software bug.

The video data is transmitted from scheduler module 102 to Al engine, which receives the video data, over the network connection.

In an eighth operation of the process, bug data descriptive of the software bug, obtained from Al model 111, and the video data is transmitted by the Al engine to bug reporting module 112.

In a ninth operation of the process, ug reporting module 112 generates a bug report based on the data received from the Al engine. The bug report comprises a textual and/or structured description of the detected bug, its classification type, time of occurrence, session metadata, and an embedded or linked version of the corresponding video content. The report may further comprise system state snapshots, configuration details, and any relevant metadata extracted from the event data originally collected by SDK module 101.

In a variant, bug reporting module 112 is further configured to maintain and update a historical record of detected bugs for the video game application across multiple gameplay sessions and across different client terminals. According to this variant, bug reporting module 112 receives and processes bug detection results and associated data from a set of client terminals, including client terminal 10, executing the same video game. Bug reporting module 112 stores these results in a structured database and continuously aggregates the incoming reports.

To reduce redundancy and improve clarity, bug reporting module 112 performs aggregation by grouping bug instances that share common characteristics. The grouping criteria may include bug type, in-game location, triggering event sequence, exception signature, or stack trace hash. This process allows the system to identify recurring bugs, avoid duplication of entries, and present consolidated information to developers. Each group of identical or similar bug instances is represented by a unified entry in the bug report.

Among the multiple video contents associated with the grouped bug instances, bug reporting module 112 may select a representative video for inclusion in the final bug report. The selected video may be chosen based on predefined criteria such as video quality, completeness of the scene, clarity of the bug manifestation, or metadata consistency.

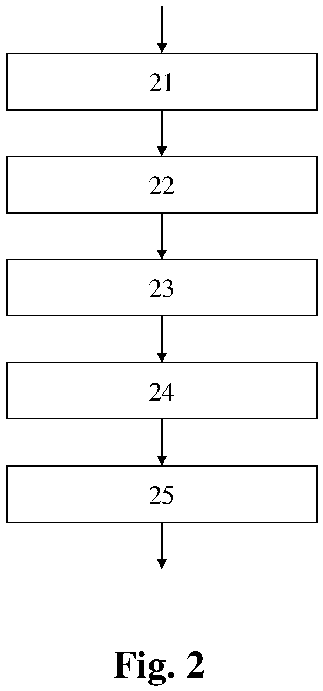

**Figure 2** shows a schematic block diagram of steps of a method of identifying software bugs in a video game application, in accordance with at least one exemplary embodiment. The method is implemented by one or more processors of an apparatus corresponding for example to computing device 11, e.g., a cloud-based server.

In a first step 21, event data representative of at least an event generated during runtime of the video game is received.

In a second step 22, a software bug based on the event data is identified by feeding the event data into an Al model trained in a context of the video game.

In a third step 23, a request for a video content representative of the runtime of the video game at a time of occurrence of the at least an event is transmitted.

In a fourth step 24, video data representative of the video content is received in response to the request.

In a fifth step 25, the software bug is reported according to bug data descriptive of the software bug and according to the video data.

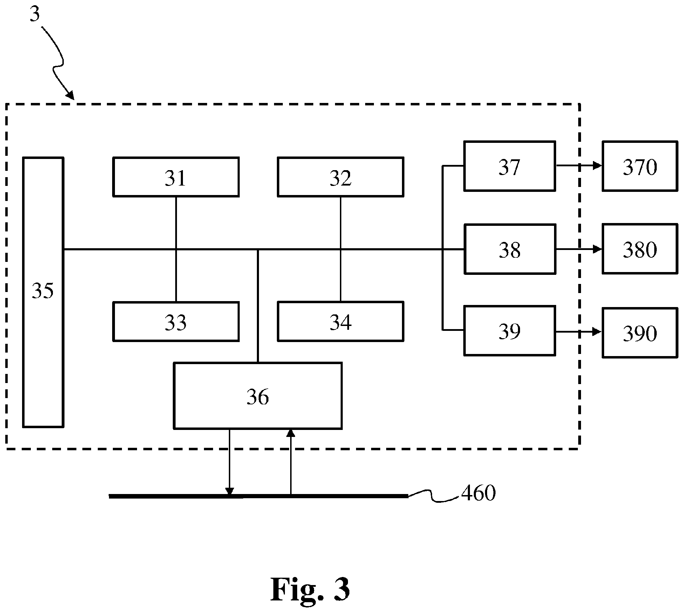

**Figure 3** shows a schematic block diagram illustrating an example of a system or apparatus 3 in which various aspects and exemplary embodiments are implemented.

Apparatus 3 may be embedded as one or more devices including the various components described below. In various embodiments, apparatus 3 may be configured to implement one or more of the aspects described in the present application.

Examples of equipment that may form all or part of the apparatus 3 include personal computers, laptops, smartphones, tablet computers, digital multimedia set top boxes and their associated processing systems, display devices, light-emitting devices, servers, chroma encoders, chroma decoders, video encoders, video decoders, audio encoders, audio decoders, post-processors processing output from a chroma and/or video and/or audio decoder, pre-processors providing input to chroma and/or video and/or audio encoder, web servers, wireless (e.g., Bluetooth^{®}) connected devices, game peripherals such as game controller, mouse, mousepad, keyboard, headset, headphones, any other device for processing vocal query, game parameter, game data, game metadata, user telemetry, or other communication devices. Elements of apparatus 3, singly or in combination, may be embodied in a single integrated circuit (IC), multiple ICs, and/or discrete components. For example, in at least one embodiment, the processing and encoder/decoder elements of apparatus 3 may be distributed across multiple ICs and/or discrete components. In various embodiments, the apparatus 3 may be communicatively coupled to other similar systems, or to other electronic devices, via, for example, a communication bus or through dedicated input and/or output ports.

Apparatus 3 may include at least one processor 31 configured to execute instructions loaded therein for implementing, for example, the various aspects described in the present application. Processor 31 may include embedded memory, input output interface, and various other circuitries as known in the art. Apparatus 3 may include at least one memory 32 (for example a volatile memory device and/or a non-volatile memory device). Apparatus 3 may include a storage device 34, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. Storage device 34 may include an internal storage device, an attached storage device, and/or a network accessible storage device, as non-limiting examples.

Apparatus 3 may include an encoder/decoder module 33 configured, for example, to process data to provide encoded/decoded video signal or data and/or encoded/decoded audio signal or data, and encoder/decoder module 33 may include its own processor and memory. Encoder/decoder module 33 may represent module(s) that may be included in a device to perform the encoding and/or decoding functions. As is known, a device may include one or both of the encoding and decoding modules. Additionally, encoder/decoder module 33 may be implemented as a separate element of apparatus 3 or may be incorporated within processor 31 as a combination of hardware and software as known to those skilled in the art.

Program code to be loaded onto processor 31 or encoder/decoder module 33 to perform the various aspects described in the present application may be stored in storage device 34 and subsequently loaded onto memory 32 for execution by processor 31. In accordance with various embodiments, processor 31, memory 32, storage device 34, and encoder/decoder module 33 may store one or more of various items during the performance of the processes described in the present application. Such stored items may include, but are not limited to, data representative of chroma/lighting content, data representative of video content, a bitstream, matrices, variables, and intermediate or final results from the processing of equations, formulas, operations, and operational logic.

In several embodiments, the memory inside processor 31 and/or encoder/decoder module 33 may be used to store instructions and to provide working memory for processing that may be performed during data processing, encoding or decoding.

In other embodiments, however, a memory external to the processing device (for example, the processing device may be the processor) may be used for one or more of these functions. The external memory may be memory 32 and/or storage device 34, for example, a dynamic volatile memory and/or a non-volatile flash memory. In at least one embodiment, a fast external dynamic volatile memory such as RAM may be used as working memory for data processing.

The input to the elements of apparatus 3 may be provided through various input devices as indicated in block 35. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

Various embodiments rearrange the order of the above-described (and other) elements, remove some of these elements, and/or add other elements performing similar or different functions.

Adding elements may include inserting elements between existing elements, such as, for example, inserting amplifiers and an analog-to-digital converter. In various embodiments, the RF portion may include an antenna.

Additionally, the USB and/or HDMI terminals may include respective interface processors for connecting apparatus 3 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 31 as necessary. Similarly, aspects of USB or HDMI interface processing may be implemented within separate interface ICs or within processor 31 as necessary. The processed stream may be provided to various processing elements, including, for example, processor 31, and encoder/decoder module 33 operating in combination with the memory and storage elements to process the data stream as necessary for presentation on an output device.

Various elements of apparatus 3 may be provided within an integrated housing. Within the integrated housing, the various elements may be interconnected and transmit data therebetween using suitable connection arrangement, for example, an internal bus as known in the art, including the I2C bus, wiring, and printed circuit boards.

Apparatus 3 may include communication interface 36 that enables communication with other devices via communication channel 360. Communication interface 36 may include, but is not limited to, a transceiver configured to transmit and to receive data over communication channel 360. Communication interface 36 may include, but is not limited to, a modem or network card and communication channel 360 may be implemented, for example, within a wired and/or a wireless medium.

Data may be streamed to apparatus 3, in various embodiments, using a Wi-Fi network such as IEEE 802.11. The Wi-Fi signal of these embodiments may be received over communication channel 360 and communications interface 36 which are adapted for Wi-Fi communications. Communication channel 360 of these embodiments may be typically connected to an access point or router that provides access to outside networks including the Internet for allowing streaming applications and other over-the-top communications.

Other embodiments may provide streamed data to apparatus 3 using a set-top box or a computer that delivers the data over the HDMI connection of block 35.

Still other embodiments may provide streamed data to apparatus 3 using the RF connection of block 35.

The streamed data may be used as a way for signaling information used by apparatus 3. The signaling information may comprise the data encoded in a container such as a binary stream for example.

It is to be appreciated that signaling may be accomplished in a variety of ways. For example, one or more syntax elements, flags, and so forth may be used to signal information to a corresponding data processing device in various embodiments.

Apparatus 3 may provide an output signal to various output devices, including a display 370, audio output device 380, and other peripheral devices 390 like haptic devices/actuators.

In various embodiments, control signals may be communicated between apparatus 3 and display 370, audio output device 380, or other peripheral devices 390 using signaling such as AV.Link (Audio/Video Link), CEC (Consumer Electronics Control), Audio protocols, USB (Universal Serial Bus), HID (Human Interface Design) for USB, HIF UHP (Haptics Industry Forum - Universal Haptic Protocol) or other communications protocols that enable device-to-device control with or without user intervention.

The output devices may be communicatively coupled to apparatus 3 via dedicated connections through respective interfaces 37, 38, and 39.

Alternatively, the output devices may be connected to apparatus 3 using communications channel 360 via communication interface 36. Display 370, audio output device 380 and/or peripheral devices 390 such as haptic device(s) (actuators) may be integrated in a single unit with the other components of apparatus 3 in an electronic device such as, for example, a television.

In various embodiments, display interface 37 may include a display driver, such as, for example, a timing controller (T Con) chip.

Display 370, audio output device 380 and/or peripheral devices 390 such as haptic device(s) (actuators) may alternatively be separate from one or more of the other components. In various embodiments in which display 370, audio output device 380 and/or peripheral devices 390 such as haptic device(s) (actuators) may be external components, the output signal may be provided via dedicated output connections, including, for example, HDMI ports, USB ports, or COMP outputs.

In **Figure 1**, various methods and processes are described herein, and each of the methods and/or processes includes one or more steps, operations or actions for achieving the described method. Unless a specific order of steps, operations or actions is required for proper operation of the method and/or process, the order and/or use of specific steps and/or operations and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic and/or chroma and/or audio encoders, video and/or haptic and/or chroma and/or audio decoders, haptic engine, chroma engine, game engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, headset, XR headset, headphones, and any other device for processing game data or signals, or other communication devices. As should be clear, the equipment may be mobile.

Computer software may be implemented by processor 31 or by hardware, or by a combination of hardware and software. As a non-limiting example, the embodiments may be also implemented by one or more integrated circuits. Memory 32 may be of any type appropriate to the technical environment and may be implemented using any appropriate data storage technology, such as optical memory devices, magnetic memory devices, semiconductor-based memory devices, fixed memory, and removable memory, as non-limiting examples. Processor 31 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Furthermore, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for identifying software bugs in a video game application, the method being implemented by at least a processor and comprising:
- receiving (21) event data representative of at least an event generated during runtime of said video game;
- identifying (22) a software bug based on said event data by feeding said event data into an Al model trained in a context of said video game;
- transmitting (23) a request for a video content representative of the runtime of the video game at a time of occurrence of said at least an event;
- receiving (24) video data representative of said video content in response to said request;
- reporting (25) said software bug according to bug data descriptive of said software bug and said video data.

2. The method according to claim 1, wherein the receiving of event data, the identifying of the software bug, the transmitting of the request, the receiving of video data and the reporting are implemented by an Al engine run by a computing device (11) communicatively coupled with a client terminal (10) running said video game application.

3. The method according to claim 1 or 2, wherein said event data is generated by a Software Development Kit module, called SDK module (101), integrated in said video game application.

4. The method according to claim 3 in dependance to claim 2, wherein said event data is transmitted from said SDK module (101) to a scheduler module (102) integrated in said video game application, the scheduler module (102) being configured to interface said video game application with said Al engine.

5. The method according to any one of claims 1 to 4, wherein said video data is generated by a backend module (103) integrated in said video game application upon reception of said request.

6. The method according to claim 5 in dependance to claim 4, wherein said request is relayed to said backend module (103) by said scheduler module (102), said video data being transmitted from said backend module (103) to said scheduler module (102).

7. The method according to any one of claims 1 to 6, wherein said request comprises temporal information representative of said time of occurrence of said at least an event.

8. The method according to any one of claims 1 to 7, wherein said event data belongs to a set of data comprising:
- data representative of a type of said at least an event;
- data representative of contextual information relating to the in-game environment at the time of said at least an event;
- data representative of said time of occurrence of said at least an event.

9. An apparatus (3) for identifying software bugs in a video game application, wherein said apparatus comprising a memory (32) associated with at least a processor (31) configured to implement the method according to claim 1.

10. A system (1) comprising an apparatus (3) according to claim 9 and a client terminal (10) communicatively coupled with said apparatus (3), said client terminal (10) comprising a memory associated with at least a processor configured to run the video game application, the video game application comprising a scheduler module (102), a SDK module (101) and a backend module (103), wherein said system (1) is configured to implement the method according to any one of claims 1 to 8.

11. A non-transitory processor readable medium having stored therein instructions for causing a processor to perform at least the steps of the method according to any one of claims 1 to 8.

12. A computer program product comprising instructions of program code for executing the method according to any one of claims 1 to 8, when said program is executed on a computer.
